## Europäisches Patentamt

## European Patent Office

## Office européen des brevets

(19)

(11) Veröffentlichungsnummer: **0 193 735**
B1

(12) **EUROPÄISCHE PATENTSCHRIFT**

(45) Veröffentlichungstag der Patentschrift:
27.09.89

(51) Int. Cl.⁴: **G05D 21/02,** G01N 17/00,
G21C 19/30, C23F 15/00

(21) Anmeldenummer: 86101218.5

(22) Anmeldetag: 30.01.86

(54) Verfahren und Einrichtung zum Schutz von Dampferzeugern, insbesondere von Kernreaktoren.

(30) Priorität: 13.02.85 DE 3504925

(43) Veröffentlichungstag der Anmeldung:
10.09.86 Patentblatt 86/37

(45) Bekanntmachung des Hinweises auf die Patenterteilung:
27.09.89 Patentblatt 89/39

(84) Benannte Vertragsstaaten:
CH DE FR IT LI SE

(56) Entgegenhaltungen:
EP-A- 0 084 404
EP-A- 0 094 884
DE-A- 3 006 350
GB-A- 2 148 511

PATENT ABSTRACTS OF JAPAN, Band 3,
Nr. 123 (C-61), 16. Oktober 1979; & JP - A
- 54 101 734 (TOKYO SHIBAURA) 10-08-1979
CORROSION-NACE, Band 29, Nr. 4, April 1973,
Seiten 123-129; R.L. COWAN et al.: "Electrochemical
measurements of corrosion processes in a boiling
water nuclear reactor"
KERNENERGIE, Band 27, Heft 4, Seiten 156-159; V.
BERTHOLD et al.: "Elektroden für elektrochemische
Messungen in Druckwassersystemen" Ö
PATENT ABSTRACTS OF JAPAN, Band 6,

(73) Patentinhaber: Siemens Aktiengesellschaft,
Wittelsbacherplatz 2, D-8000 München 2(DE)

(72) Erfinder: Beyer, Werner, Dr. Dipl.-Chem.,
Luitpoldstrasse 44, D-8520 Erlangen(DE)
Erfinder: Wieling, Norbert, Dr. Dipl.-Ing., Baumäcker 18,
D-8551 Igensdorf(DE)
Erfinder: Stellwag, Bernhard, Dr. Dipl.-Phys.,
Norikerstrasse 23, D-8500 Nürnberg 1(DE)

(56) Entgegenhaltungen: (Fortsetzung)
nr. 188 (P-144)[1066], 28. September 1982; & JP -
A 57 100 341 (TOKYO SHIBAURA) 22.06.1982

## Beschreibung

Die Erfindung betrifft ein Verfahren zum Korrosionsschutz von Dampferzeugern mit einem einen Wärmeträger führenden Rohrbündel und einem das Rohrbündel einschließenden Gehäuse, das Speisewasser aufnimmt, durch chemische Konditionierung des Speisewassers, wobei das Korrosionspotential bestimmt wird.

Aus der EP-A 0 084 404 ist ein Verfahren zum Feststellen der Korrosion eines Metallteiles bekannt. Dabei wird an dem Metallteil das Korrosionspotential überwacht. Dazu ist eine Vorrichtung erforderlich, bei der zwei Metallteile, die mit einer korrosionsfördernden Flüssigkeit in Kontakt stehen, durch eine Isolation getrennt sind. Zwischen den beiden Metallteilen ist ein Millivoltmeter angeordnet. Mit dieser Vorrichtung erfolgt eine Messung des Korrosionspotentials stets in einem separaten Kreislauf, beispielsweise in einem Bypaß an einem Dampferzeuger.

Da einige korrosionsfördernde Stoffe die Meßvorrichtung im Bypaß nicht erreichen, werden stets zu geringe Werte ermittelt. Der korrosionsfördernde Sauerstoff beispielsweise bildet schon im Dampferzeuger mit den Metallen der Dampferzeugerwände Metalloxide. Der Sauerstoff gelangt nicht in den Bypaß.

Aus dem Aufsatz "Electrochemical Measurements of Corrosion Processes in a Boiling Water Nuclear Reactor" in der Zeitschrift Corrosion-Nace, Band 29, Nr. 4, April 1973 ist ein Elektrolytschlüssel zur Messung des Korrosionspotentials bekannt. Dieser Elektrolytschlüssel verbindet eine Elektrode mit einem Meßort.

Aus dem Aufsatz "Elektroden für elektrochemische Messungen in Druckwassersystemen" in der Zeitschrift "Kernenergie", Band 27, Heft 4, insbesondere Seite 156 ist es bekannt, daß Eisenwerkstoffe, wie sie zum Bau von Dampferzeugern verwendet werden, in hochreinem, sauerstofffreiem Wasser gewöhnlich keine Korrosion erleiden. Dies ändert sich jedoch mit steigender Temperatur. Deshalb gibt es bei der Erzeugung von Dampf verschiedene chemische Konditionierungsmaßnahmen für das Speisewasser, um Korrosion zu vermeiden oder mindestens zu verringern.

In dem vorgenannten Aufsatz der Zeitschrift "Kernenergie" wird mit einer besonderen Elektrodenanordnung das Redoxpotential und seine zeitliche Veränderung im Primärkreis eines Druckwassersystems ermittelt; ferner soll damit das mit der Korrosionsanfälligkeit korrelierende Ruhepotential exponierter Werkstoffproben bestimmt werden. Diese und weitere Messungen sollen für die Aufklärung von Korrosionsvorgängen und die Ausarbeitung von Korrosionsschutzmaßnahmen von Bedeutung sein. Deshalb sind noch weitere Rechnungen, Untersuchungen usw. notwendig, bevor der Korrosionsschutz an einem Druckwassersystem tatsächlich verbessert ist.

Die Erfindung geht dagegen von der Aufgabe aus, für Dampferzeuger der obengenannten Art den Schutz gegen Korrosion auf der Sekundärseite unmittelbar zu verbessern. Im Gegensatz zum Bekannten sollen also auf weitere wissenschaftliche Untersuchungen oder Laborarbeiten verzichtet werden. Insbesondere sollen auch korrosionsfördernde Stoffe, wie Sauerstoff, die schnell chemische Verbindungen eingehen und dann nicht mehr nachweisbar sind, hinsichtlich ihrer Korrosionswirkung erfaßbar sein.

Die Aufgabe wird erfindungsgemäß dadurch gelöst, daß bei im Betrieb befindlichem Dampferzeuger im Dampferzeuger

a) eine Messung des Korrosionspotentials an mindestens einem Rohr des Rohrbündels oberhalb eines Rohrbodens des Dampferzeugers mit einer Referenzelektrode, die außerhalb des Dampferzeugers angeordnet und mit mindestens einem Rohr des Rohrbündels durch einen Elektrolytschlüssel elektrolytisch kontaktiert ist, fortlaufend erfolgt, indem die Spannung der Referenzelektrode gegenüber dem mit dem Rohr galvanisch verbundenen Rohrboden oder Gehäuse gemessen wird und

b) eine Messung des Redoxpotentials des Speisewassers mit einer Elektrode im unteren Bereich des Rohrbündels gegenüber einer externen Referenzelektrode fortlaufend erfolgt und daß bei auf Korrosionsgefahr hindeutenden Werten die Potentiale durch eine entsprechend geänderte Konditionierung des Speisewassers zu negativen Werten hin verschoben werden.

Die Erfindung ergibt somit eine betriebsbegleitende elektrochemische Messung, mit der eine Korrosionsgefährdung der Berohrung des Dampferzeugers zum frühest möglichen Zeitpunkt erfaßt und beseitigt werden kann. Das erfindungsgemäß ermittelte Korrosionspotential der Dampferzeugerrohre gibt dabei Auskunft, wie die Berohrung auf Änderungen in der Wasserchemie, die durch das Redoxpotential angezeigt werden, reagiert. Damit können Gegenmaßnahmen eingeleitet werden, bevor Schädigungen möglich sind.

Mit dem erfindungsgemäßen Verfahren wird insbesondere der Vorteil erzielt, daß gleichzeitig das Korrosionspotential und das Redoxpotential, beide unmittelbar am Dampferzeuger zu bestimmen sind. Durch die gleichzeitige Messung beider Potentiale erzielt man besonders zuverlässige Hinweise auf den Korrosionszustand im Dampferzeuger. Insbesondere jedoch wird aufgrund der erfindungsgemäß ausgewählten Meßorte am Dampferzeuger ein Korrosionsangriff unmittelbar am Ort, wo er stattfindet, erfaßt. Eine Ableitung von Speisewasser zu einer Meßvorrichtung ist mit dem erfindungsgemäßen Verfahren nicht mehr erforderlich. Es werden dadurch vorteilhaft auch Einflüsse von korrosionsfördernden Stoffen, wie Sauerstoff, erfaßt, die schon nach kurzer Zeit wegen chemischer Reaktionen nicht mehr nachweisbar wären.

Die Konditionierung, insbesondere die Änderung der Konditionierung aufgrund der Potentialmessungen, erfolgt vorteilhaft durch fernbetätigte Zugabe flüssigkeitsgelöster Konditionierungsstoffe, weil damit sowohl die Dosierung als auch die notwendige Verteilung im Speisewasser besonders günstig zu erreichen ist. Damit kann die Zugabemenge insbesondere durch eine Zeitsteuerung für einen gleichmäßigen Flüssigkeitsstrom mit Hilfe eines Regelkreises vorgegeben werden. Es ist aber auch möglich, die Dosierung mit Hilfe von kleinen Einzelmengen vorzunehmen, die getaktet und zählbar dem Speisewasser zugesetzt werden.

Die Erfindung kann mit besonders gutem Erfolg so ausgeführt werden, daß das Redox-Potential gegenüber einer externen Referenzelektrode mit einer in Bezug auf das Speisewasser inerten Elektrode im unteren Bereich des Rohrbündels, insbesondere im Bereich eines das Rohrbündel unten abschließenden Rohrbodens, gemessen wird. In diesem Bereich kann sich Schlamm ablagern, in dem die Korrosion fördernde Ionen (z. B. Chloride, Sulfate) sich langfristig anreichern. Sie führen zu einer starken Verschiebung der spezifizierten Dampferzeuger-Wasserqualität in Richtung konzentrierter, aggressiver Lösungen. Dies wird mit der Erfindung erfaßt und kann abgestellt werden.

Das Korrosionspotential an einem Rohr wird dagegen so ermittelt, daß eine Referenzelektrode außerhalb des Dampferzeugers angeordnet und mit dem Rohr durch einen Elektrolytschlüssel elektrolytisch kontaktiert wird. Die Spannung der Referenzelektrode wird gegenüber dem mit dem Rohr galvanisch verbundenen Rohrboden oder Gehäuse gemessen.

Die für die Erfindung kennzeichnende fortlaufende Ermittlung der Potentialwerte beim Betrieb des Dampferzeugers erfordert betriebstüchtige und störungsfreie Einrichtungen, die hohen Drücken und Temperaturen gewachsen sein müssen. Eine solche Einrichtung zur Durchführung des Verfahrens kann so ausgebildet sein, daß der Elektrolytschlüssel als mechanisch stabiles Röhrchen mit einem Metallmantel, einer isolierenden inneren Metalloxidschicht, einem inneren Kunststoffschlauch aus thermoplastischem Material und einer Faserseele ausgeführt ist.

Dabei kann der Metallmantel aus Zirkon, Titan, Tantal, Hafnium oder korrosionsbeständigen CrNi-Stählen bestehen. Die Faserseele besteht vorteilhaft aus Asbest, sie ist insbesondere in einen Schlauch aus Polytetrafluoräthylen eingeschlossen.

Die Referenzelektrode kann eine Silber/Silberchlorid-Elektrode sein und in einem Metallgehäuse eingeschlossen sein. Dieses Gehäuse kann mit einem den Elektrolytschlüssel umfassenden Gewindestutzen versehen sein, mit dem die Ref.-Elektrode am Dampferzeuger befestigt werden kann.

Zur näheren Erläuterung der Erfindung wird anhand der Zeichnung ein Ausführungsbeispiel beschrieben. Es zeigt:

Fig. 1 ein Prinzipschaltbild eines mit der Erfindung geschützten Dampferzeugers,

Fig. 2 eine Einrichtung zur Ausübung des erfindungsgemässen Verfahrens, wobei die linke Seite der Figur die äußere Kontur und die rechte Seite einen Längsschnitt darstellt und

Fig. 3 in einem Ausschnitt in stark vergrößertem Maßstab der Aufbau des Elektrolytschlüssels.

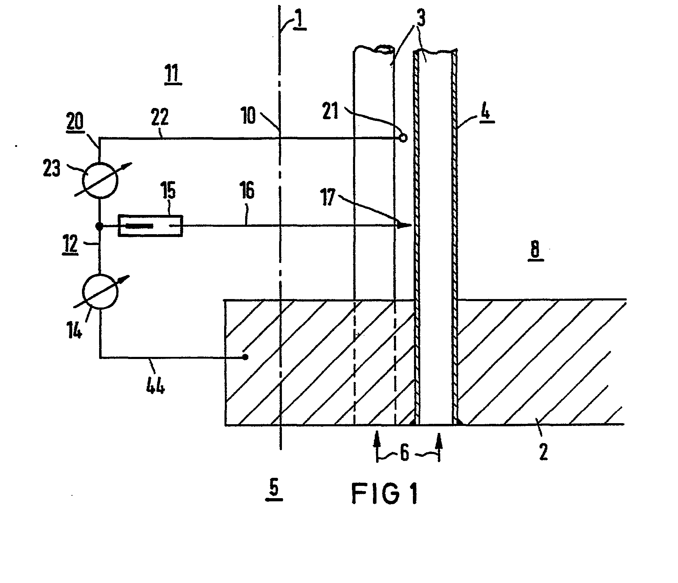

Der in Fig. 1 nur zum Teil dargestellte Dampferzeuger 1 eines Druckwasser-Leistungsreaktors umfaßt einen Rohrboden 2. Dies ist eine Stahlplatte, in die die Enden von Rohren 3 eines Rohrbündels 4 eingelassen sind. Die Rohre 3 bestehen z. B. aus Incoloy 800 und werden mit dem Primärwasser des Druckwasserreaktors beheizt, das aus der Primärkammer 5 unter dem Rohrboden 2 in Richtung der Pfeile 6 in die Rohre 3 eintritt. Der Sekundärraum 8 oberhalb des Rohrbodens 2 enthält Speisewasser, das durch die Wärme der Rohre 3 verdampft werden soll. Der Verdampfungsdruck liegt bei etwa 70 bar, die Dampftemperatur bei etwa 290°C. Das Primärwasser ist entsprechend heißer, seine Temperatur liegt bei mehr als 300°C, der Druck im Primärraum 5 liegt bei 160 bar oder mehr. Dies ergibt große Beanspruchungen für das Rohrbündel 4, den Rohrboden 2 und das Gehäuse des Dampferzeugers 1, das durch die strichpunktierte Gerade 10 als Trennung zwischen dem Innenraum des Dampferzeugers 1 und der Außenseite 11 angedeutet ist.

Mit dem Rohrboden 2 ist ein Meßkreis 12 zur Elektrodenpotentialmessung verbunden. Er umfaßt ein Millivoltmeter 14, eine Referenzelektrode 15 und einen Elektrolytschlüssel 16, der durch die Wand 10 des Dampferzeugers 1 bis in die Nähe eines Dampferzeugerrohres 3 führt, und zwar in den unteren Bereich in der Nähe des Rohrbodens, denn der Abstand der Spitze 17 des Elektrolytschlüssels 16 vom Rohrboden beträgt nur etwa das 2- bis 5-fache des Rohrdurchmessers.

Ein weiterer Meßkreis 20 erfaßt das Redox-Potential. Er umfaßt eine weitere, vorzugsweise aus Platin bestehende Elektrode 21, die in der Nähe der Spitze 17 des Elektrolytschlüssels 16 angeordnet ist. Die Elektrode 21 ist mit einer isolierten elektrischen Leitung 22 über ein Millivoltmeter 23 mit der Bezugselektrode 15 verbunden.

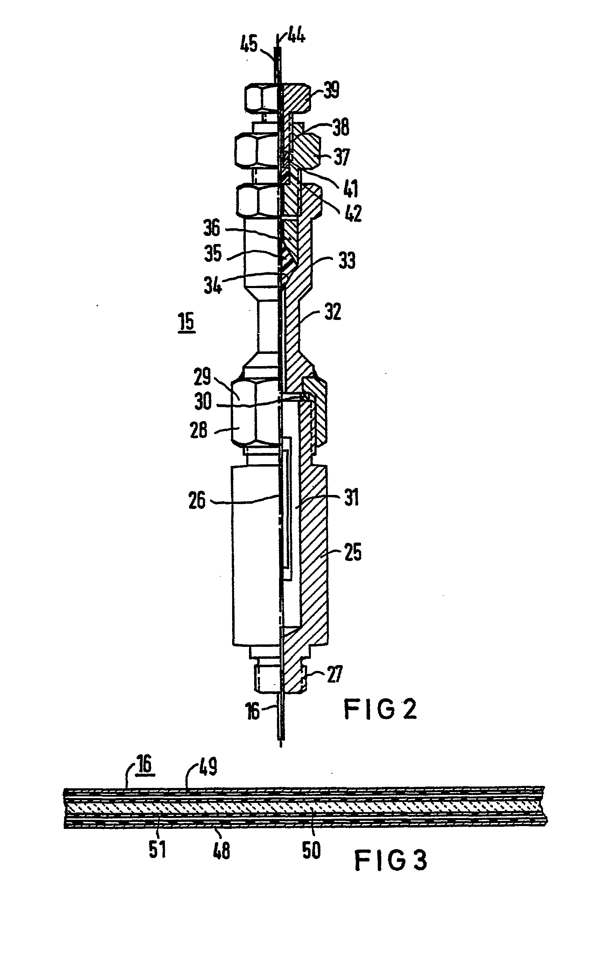

Die Fig. 2 zeigt den Aufbau der Referenzelektrode 15. Man erkennt, daß ein holzylindrisches Metallgehäuse 25 eine zentrale Elektrodenanordnung 26 mit einer geeigneten Elektrode II. Art, z. B. mit den Komponenten Silber/Silberchlorid einschließt. Das Metallgehäuse 25 hat an seinem in Fig. 2 unteren Ende einen Gewindestutzen 27. Mit diesem ist das Metallgehäuse 25 in die Wand 10 des Dampferzeugers 1 eingeschraubt. An dem dem Gewindestutzen 27 gegenüberliegenden Ende des Metallgehäuses 25 ist ein mit einem Sechskant 28 versehener Deckel 29 aufgeschraubt, der eine Dichtung 30 so anpreßt, daß der Innenraum 31 mit der Referenzelektrode 15 entsprechend den Auslegungswerten des Dampferzeugers 1 druck- und temperaturfest abgedichtet ist.

Der Deckel 29 setzt sich mit einer zylindrischen Verlängerung 32 nach oben fort, die in eine Erweiterung 33 übergeht. Die Erweiterung 33 umschließt einen doppelkonischen Innenraum 34, in den ein doppelkegeliger Dichtungskörper 35 aus Teflon eingelegt ist. Der Dichtungskörper 35 wird mit einer Hohlkegelkappe 36 von einem Anpreßrohr 37 unter Druck gesetzt, das seinerseits eine Gewindebohrung 38 zur Aufnahme einer Anpreßschraube 39 bildet. Die Anpreßschraube 39 drückt beim Einschrauben in die Schraube 37 über einen Metallring 41 auf einen Teflonring 42. Dadurch entsteht eine doppelte Abdichtung für einen Silberdraht 44, der mit einem Teflonschlauch 45 umgeben und damit isoliert ist. Der Silberdraht 44 ist über das Millivoltmeter 14 galvanisch mit dem Rohrboden 1 verbunden. Ferner ist der Draht 44 an das Millivoltmeter 23 angeschlossen.

Aus dem Gewindestutzen 27 am anderen Ende des Metallgehäuses 25 ist der Elektrolytschlüssel 16 herausgeführt. Er besitzt, wie die Fig. 3 zeigt, einen Metallmantel 48, vorzugsweise aus Zirkon, Titan, Tantal, Hafnium oder korrosionsbeständigem Chrom-Nickel-Stahl. Der Metallmantel 48 kann in das Metallgehäuse 25 der Referenzelektrode dicht eingesetzt, z.B. eingelötet, sein. Er kann ferner auf der Außen- und der Innenseite mit einer elektrisch isolierenden Metalloxidschicht 49 überdeckt sein, die nur auf der Innenseite dargestellt ist. Im Inneren des Metallmantels 48 läuft als Seele ein Faden 50 aus Asbestfasern, der mit einem Teflonschlauch 51 umgeben ist. Der Asbestfaden 50 steht mit dem Speisewasser des Dampferzeugers so in Verbindung, daß er den elektrolytischen Kontakt des Speisewassers mit der in FIG 1 angedeuteten Referenzelektrode 15 herstellt.

Mit der in den FIG 1 bis 3 dargestellten Einrichtung wird das Korrosionspotential der Berohrung 4 und das Redoxpotential des Dampferzeuger-Speisewassers gemessen. Ausgehend von diesen Potentialen kann bei Bedarf die Konditionierung des Speisewassers geändert werden, insbesondere durch Zugaben von Hydrazin. Die dabei zur Steuerung vorgesehene Bandbreite beträgt z.B. 100 Millivolt.

## Patentansprüche

1. Verfahren zum Korrosionsschutz von Dampferzeugern mit einem Wärmeträger führenden Rohrbündel und einem das Rohrbündel einschließenden Gehäuse, das Speisewasser aufnimmt, durch chemische Konditionierung des Speisewassers, wobei das Korrosionspotential bestimmt wird, dadurch gekennzeichnet, daß bei im Betrieb befindlichem Dampferzeuger im Dampferzeuger

a) eine Messung des Korrosionspotentials an mindestens einem Rohr des Rohrbündels oberhalb eines Rohrbodens des Dampferzeugers mit einer Referenzelektrode, die außerhalb des Dampferzeugers angeordnet und mit mindestens einem Rohr des Rohrbündels durch einen Elektrolytschlüssel elektrolytisch kontaktiert ist, fortlaufend erfolgt, indem die Spannung der Referenzelektrode gegenüber dem mit dem Rohr galvanisch verbundenen Rohrboden oder Gehäuse gemessen wird und

b) eine Messung des Redoxpotentials des Speisewassers mit einer Elektrode im unteren Bereich des Rohrbündels gegenüber einer externen Referenzelektrode fortlaufend erfolgt

und daß bei auf Korrosionsgefahr hindeutenden Werten die Potentiale durch eine entsprechend geänderte Konditionierung des Speisewassers zu negativen Werten hin verschoben werden.

2. Verfahren nach Anspruch 1, dadurch gekennzeichnet, daß die Konditionierung durch fernbetätigte Zugabe flüssigkeitsgelöster Konditionierungsstoffe erfolgt und daß die Zugabemenge vorzugsweise durch eine Zeitsteuerung mit Hilfe eines Regelkreises vorgegeben wird.

3. Verfahren nach Anspruch 1 oder 2, dadurch gekennzeichnet, daß das Redox-Potential gegenüber einer externen Referenzelektrode mit einer in bezug auf das Speisewasser inerten Elektrode im unteren Bereich des Rohrbündels, insbesondere im Bereich eines das Rohrbündel unten abschließenden Rohrbodens, gemessen wrid.

4. Einrichtung zur Durchführung des Verfahrens nach Anspruch 1 an einem Dampferzeuger (1) mit einem Rohrboden (2), in dem die Enden von Rohren (3) eines Rohrbündels (4) eingelassen sind, dadurch gekennzeichnet, daß zur Messung des Korrosionspotentials eine Referenzelektrode (15) durch einen Elektrolytschlüssel (16) mit einem Rohr (4) und über ein Millivoltmeter (14) mit dem Rohrboden (2) verbunden ist, daß der Elektrolytschlüssel (16) als mechanisch stabiles Röhrchen mit einem Metallmantel (48), einer isolierenden inneren Metalloxidschicht (49), einem inneren Kunststoffschlauch (51) aus thermoplastischem Material und einer Faserseele (50) ausgeführt ist, und daß zur Messung des Redoxpotentials von Speisewasser im Dampferzeuger (1) eine weitere Elektrode (21) über ein Millivoltmeter (23) mit der Referenzelektrode (15) verbunden ist.

5. Einrichtung nach Anspruch 4, dadurch gekennzeichnet, daß der Metallmantel (48) aus Zirkon, Titan, Tantal, Hafnium oder korrosionsbeständigen CrNi-Stählen besteht.

6. Einrichtung nach Anspruch 4 oder 5, dadurch gekennzeichnet, daß die Faserseele (50) aus Asbest besteht und in einen Schlauch (51) aus Polytetrafluoräthylen eingeschlossen ist.

7. Einrichtung nach einem der Ansprüche 4 bis 6, dadurch gekennzeichnet, daß die Referenzelektrode (15) eine Silber/Silberchlorid-Elektrode (26) ist und in einem Metallgehäuse eingeschlossen ist.

8. Einrichtung nach Anspruch 7, dadurch gekennzeichnet, daß das Metallgehäuse (25) einen den Elektrolytschlüssel (16) umfassenden Gewindestutzen (27) aufweist, mit dem die Elektrode am Dampferzeuger (1) befestigt werden kann.

## Claims

1. Method for protecting steam generators from corrosion, having a tube bundle carrying a coolant, and a housing enclosing the tube bundle which contains feed water, by means of chemical conditioning of the feed water, by which the corrosion potential is determined, characterised in that, during the operation of a steam generator, in that steam generator:

a) there ensues continually a measurement of the corrosion potential, taken on at least one tube of the tube bundle, above a tube plate of the steam generator, using a reference electrode which is arranged outside the steam generator and is in electrolytic contact with at least one tube of the tube bundle by means of an electrolytic key, while the voltage of the reference electrode is measured in comparison with the housing or the tube plate, which is conductively connected to the tube; and

b) there ensues continually a measurement of the redox potential of the feed water, using an electrode in the lower area of the tube bundle, in comparison with an external reference electrode,

and in that, at values indicating danger of corrosion, potentials are shifted over to negative values by a correspondingly altered conditioning of the feed water.

2. Method according to claim 1, characterised in that the conditioning ensues by means of the remotely controlled addition of liquid-dissolved conditioning materials, and in that the amount added is preferably specified by means of a timing control with the help of a control loop.

3. Method according to claim 1 or 2, characterised in, that the redox potential is measured, in comparison with an external reference electrode, using an electrode which is inert with reference to the feed water, in the lower area of the tube bundle, in particular in the area of a tube plate which closes off the tube bundle on the underside.

4. Device for carrying out the method according to claim 1 on a steam generator (1), having a tube plate (2) in which the ends of tubes (3) of a tube bundle (4) are inserted, characterised in that, for measuring the corrosion potential, a reference electrode (15) is connected to a tube (4) by means of an electrolytic key (16), and to the tube plate (2) by way of a millivoltmeter (14), and in that the electrolytic key (16) is constructed as a mechanically stable tube with metal cladding (48), an insulating, inner metal oxide layer (19), inner plastic tubing (51) of thermoplastic material, and a fibre core (50), and in that, for measuring the redox potential of feed water in the steam generator (1), a further electrode (21) is connected by way of a millivoltmeter (23) to the reference electrode (15).

5. Device according to claim 4, characterised in that the metal cladding (48) consists of zirconium, titanium, tantalum, hafnium or corrosion-resistant CrNi steels.

6. Device according to claim 4 or 5, characterised in that the fibre core (50) consists of asbestos and is enclosed in polytetrafluorethylene tubing (51).

7. Device according to one of claims 4 to 6, characterised in that the reference electrode (15) is a silver/silver chloride electrode (26) and is enclosed in a metal housing (25).

8. Device according to claim 7, characterised in that the metal housing (25) has a threaded nipple (27) enclosing the electrolyte key (16), and by the threaded nipple (27) the electrode is to be fastened to the steam generator (1).

**Revendications**

1. Procédé de protection vis-à-vis de la corrosion de générateurs de vapeur, comprenant un faisceau tubulaire dans lequel passe un agent caloporteur et une enveloppe enfermant le faisceau tubulaire et recevant de l'eau d'alimentation par traitement chimique de l'eau d'alimentation, ce par quoi le potentiel de corrosion est déterminé, caractérisé en ce qu'il consiste à effectuer dans le générateur de vapeur alors que celui-ci se trouve en fonctionnement

a) une mesure en continu du potentiel de corrosion sur au moins un tube du faisceau tubulaire au-dessus d'une plaque tubulaire du générateur de vapeur avec une électrode de référence, qui est disposée à l'extérieur du générateur de vapeur et qui est en contact électrolytique avec au moins un tube du faisceau tubulaire par un pont électrolytique, en mesurant la tension de l'électrode de référence par rapport à celle de la plaque tubulaire ou de l'enveloppe reliée galvaniquement au tube et

b) une mesure du potentiel rédox de l'eau d'alimentation avec une électrode à la partie inférieure du faisceau tubulaire par rapport à une électrode de référence extérieure

et, pour des valeurs indiquant un danger de corrosion, à déplacer les potentiels vers les valeurs négatives par une modification correspondante du traitement de l'eau d'alimentation.

2. Procédé suivant la revendication 1, caractérisé en ce qu'il consiste à effectuer le traitement par addition télécommandée de substances de traitement dissoutes dans un liquide et à prescrire la quantité ajoutée de préférence par une commande dans le temps à l'aide d'un circuit de réglage.

3. Procédé suivant la revendication 1 ou 2, caractérisé en ce qu'il consiste à mesurer le potentiel rédox, par rapport à une électrode de référence extérieure, avec une électrode inerte par rapport à l'eau d'alimentation à la partie inférieure du faisceau tubulaire, notamment dans la région d'une plaque tubulaire fermant vers le bas le faisceau tubulaire.

4. Dispositif pour la mise en œuvre du procédé suivant la revendication 1 à un générateur de vapeur (1) ayant une plaque tubulaire (2) dans laquelle on introduit les extrémités des tubes (3) d'un faisceau tubulaire (4), caractérisé en ce que, pour mesurer le potentiel de corrosion, une électrode de référence (15) est reliée par un pont électrolytique (16) à un tube (4) et par un millivoltmètre (14) à la plaque tubulaire (2), en ce que le pont électrolytique (16) est constitué en petit tube stable mécaniquement, ayant une gaine métallique (48), une couche intérieure isolante d'oxyde métallique (49), un tuyau souple intérieure (51) en matière thermoplastique et une âme fibreuse (50), et en ce que, pour mesurer le potentiel rédox de l'eau d'alimentation dans le générateur de vapeur (1), une autre électrode (21, est reliée par un millivoltmètre (23) à l'électrode de référence (15).

5. Dispositif suivant la revendication 4, caractérisé en ce que la gaine métallique (48) est en zirconium, en titane, en tantale, en hafnium ou en acier au CrNi résistant à la corrosion.

6. Dispositif suivant la revendication 4 ou 5, caractérisé en ce que l'âme fibreuse (50) est en amiante et est enfermée dans un tuyau souple (51) en polytétrafluoroéthylène.

7. Dispositif suivant l'une des revendications 4 à 6, caractérisé en ce que l'électrode de référence (15) est une électrode argent/chlorure d'argent (26) et est enfermée dans un boîtier métallique.

8. Dispositif suivant la revendication 7, caractérisé en ce que le boîtier métallique (25) comporte un embout fileté (27) qui entoure le pont électrolytique (16) et par lequel l'électrode peut être fixée au générateur de vapeur (1).

FIG 1

FIG 2

FIG 3